# EUROPÄISCHE PATENTSCHRIFT

(11) **EP 3 699 558 B1**
(45) Veröffentlichungstag und Bekanntmachung des Hinweises auf die Patenterteilung: **01.04.2026**
(21) Anmeldenummer: 19157998.6
(22) Anmeldetag: 19.02.2019
(51) Int. Cl.: G01F 23/284, G01S 13/88, H01Q 1/12, H01Q 1/22

(54) **RADARSENDERANORDNUNG MIT INTEGRIERTER ANTENNE**
RADAR SENSOR ASSEMBLY WITH INTEGRATED ANTENNA
DISPOSITIF ÉMETTEUR RADAR AVEC UNE ANTENNE INTÉGRÉE

(43) Veröffentlichungstag der Anmeldung: 26.08.2020
(73) Patentinhaber: VEGA Grieshaber KG, 77709 Wolfach (DE)
(72) Erfinder: SCHULTHEISS, Daniel, 78132 Hornberg (DE); DIETERLE, Levin, 77709 Oberwolfach (DE)
(74) Vertreter: Maiwald GmbH

(56) Entgegenhaltungen:
- WO-A1-2004/017025
- DE-A1- 10 051 025
- DE-A1- 102012 112 218
- DE-A1- 4 443 055
- US-A1- 2013 016 023
- US-A1- 2017 211 963

## Beschreibung

### Gebiet der Erfindung

Die Erfindung betrifft eine Radarsenderanordnung für einen Sensor zur Prozess- und Fertigungsautomation, der zur Füllstandmessung oder zur Grenzstandbestimmung eingerichtet ist, nach Anspruch 1.

Weiter betrifft die Erfindung eine Verwendung einer Radarsenderanordnung nach einem der Ansprüche 1 bis 8 zur Füllstandmessung, zur Grenzstandbestimmung, zur Topologieerfassung, zur Bereichsüberwachung und/oder zur Fertigungsautomation.

### Hintergrund

Zur Prozess- und Fertigungsautomation, insbesondere Bereichsüberwachung, zur Füllstandmessung oder zur Grenzstandbestimmung, beispielsweise in einem Behälter, werden verschiedene Arten von Messgeräten oder Sensoren eingesetzt, beispielsweise ein Füllstandmessgerät mit einem Hochfrequenzfrontend. Diese Messgeräte werden insbesondere eingesetzt, um einen bestimmten Pegel eines Füllguts, z.B. in einem Behälter, anzuzeigen, d.h. um anzuzeigen, ob etwa eine vordefinierte obere, untere oder sonstige Grenze des Füllstands in dem Behälter erreicht wurde, oder auch, um eine Topologie des Füllguts zu bestimmen. Der Behälter kann ein Gefäß oder Messtank von beliebiger Form sein. Der Behälter kann auch ein Gerinne, beispielsweise ein Bach- oder Flussbett sein. Das Hochfrequenzfrontend ist dabei zum Senden von Mikrowellen oder Radarwellen eingerichtet. Viele Mikrowellensensoren verwenden dabei einen Radarchip mit integrierter Antenne.

Das Dokument DE 10 2012 112 218 A1 betrifft eine Antenne für ein mit Mikrowellen nach dem Laufzeitprinzip arbeitendes Füllstandsmessgerät.

Die US 2013 016 023 A1 betrifft Vorrichtungen und Verfahren, die Antennen mit Halbleiter-ICs integrieren.

Die US 2017 211 963 A1 beschreibt Verfahren zur Messung von Eigenschaften von Flüssigkeiten mittels eines Radars.

Die DE 44 43 055 A1 betrifft eine Antenneneinrichtung für ein Füllstandmess-Radargerät. Die DE 100 51 025 A1 beschreibt eine Vorrichtung zur Bestimmung des Füllstands eines Füllguts in einem Behälter.

### Zusammenfassung der Erfindung

Es ist eine Aufgabe der Erfindung, ein Füllstandmessgerät zur Verfügung zu stellen, welches einen geringen konstruktiven Aufwand bei der Herstellung benötigt.

Diese Aufgabe wird durch den Gegenstand der unabhängigen Patentansprüche gelöst. Weiterbildungen der Erfindung ergeben sich aus den Unteransprüchen und der folgenden Beschreibung.

Ein erster Aspekt betrifft eine Radarsenderanordnung für einen Sensor zur Bereichsüberwachung, zur Füllstandmessung oder zur Grenzstandbestimmung. Die Radarsenderanordnung weist einen Generator auf, der zur Erzeugung von Mikrowellen eingerichtet ist, eine planare Antenne, die mit dem Generator verbunden ist und die zum Senden der Mikrowellen von dem Generator eingerichtet ist, und eine Trägerplatte. Der Generator erzeugt dabei Mikrowellen, beispielsweise in einem Frequenzbereich von 40 bis 300 GHz, insbesondere in einem Frequenzbereich von über 140 GHz, z.B. über 200 GHz. Als planare Antenne wird dabei eine Antenne bezeichnet, welche im Wesentlichen in einer Ebene mit der Trägerplatte und/oder parallel zu der Trägerplatte angeordnet ist. Dabei ist die planare Antenne im Wesentlichen senkrecht zu einer Oberflächennormalen der Trägerplatte angeordnet. Die planare Antenne hat dabei eine Abstrahlcharakteristik, welche vorteilhaft für die Füllstandmessung und/oder Grenzstandbestimmung ist. Weiterhin kann die planare Antenne vorteilhafterweise mit der Trägerplatte verbunden oder als Teil der Trägerplatte ausgeführt sein.

Die planare Antenne ist dazu eingerichtet, die Mikrowellen im Wesentlichen senkrecht zu ihrer Oberflächennormalen abzustrahlen. Durch diese Ausführung wird eine Abstrahlung der Mikrowellen in der Ebene der Trägerplatte und/oder parallel zu der Ebene der Trägerplatte erreicht. Die planare Antenne kann am Rande der Trägerplatte angeordnet sein. Ferner kann, durch die seitliche Abstrahlung des Radarsignals, in einigen Ausführungsformen die Leiterplatte senkrecht in dem Sensor montiert werden, bei einer senkrechten Ausrichtung des Sensorkörpers. Dies kann zu einer besseren Ausnutzung des Platzes im Sensor führen. Dadurch kann weiterhin der konstruktive Aufwand bei der Herstellung des Sensors oder von Teilen des Sensors erheblich reduziert werden. Außerdem ermöglicht diese Ausführung vorteilhafterweise eine Integration des Sensors in bestimmte Arten und Formen von Gehäusen, wie sie für Füllstandmessung und/oder Grenzstandbestimmung bzw. Fertigungsautomation günstig sind. Weiterhin kann damit die Gesamtgröße des Messgeräts reduziert werden, was in zumindest einigen Fällen den Einsatz derartiger Messgeräte vereinfacht und/oder deren Anwendungsspektrum erweitert.

In einer Ausführungsform ist die Trägerplatte als eine Leiterplatte ausgeführt. Die planare Antenne kann dabei beispielsweise als eine Struktur in die Leiterplatte geätzt sein. Der Generator kann als ein offener oder geschlossener Chip auf der Leiterplatte ausgeführt sein. Dieser Chip kann, zumindest in einigen Ausführungsformen, darüber hinaus noch Bauteile für die Steuerung und/oder Auswertung der Messungen beinhalten. Ferner kann der Chip und/oder die Leiterplatte Kommunikationseinrichtungen umfassen, z.B. zur drahtlosen und/oder drahtgebundenen Kommunikation.

In einer Ausführungsform ist die Trägerplatte als ein Halbleitersubstrat ausgeführt. Dabei kann der Generator in das Halbleitersubstrat integriert sein, beispielsweise Teil des Halbleitersubstrats sein oder auf diesem angeordnet sein. Auf das Halbleitersubstrat können darüber hinaus noch Bauteile für die Steuerung und/oder Auswertung der Messungen und/oder Kommunikationseinrichtungen integriert sein. Die planare Antenne kann dabei - beispielsweise mittels Lithographie - als leitfähige Strukturen auf das Halbleitersubstrat aufgebracht werden, als eine Struktur in das Halbleitersubstrat geätzt, epitaxiert und/oder auf andere Weise hergestellt sein. Insbesondere bei hohen Frequenzen - z.B. höher als 100 GHz, insbesondere bei über 200 GHz - wird die Wellenlänge so klein, dass λ/4-Strukturen direkt auf einem Chip implementiert werden können. In einer Ausführungsform kann die Radarsenderanordnung als ein SMD-Bauteil (SMD: Surface Mount Device) im QFN (Quad Flat No Leads Package), BGA (Ball Grid Array) oder eWLP (Embedded Wafer Level Ball Grid Array) Gehäuse, z.B. als "System on Chip" (SoC), ausgeführt sein. Ein derartiges SMD-Bauteil kann z.B. dazu verwendet werden, um in herkömmlicher Bestückungs- und Löttechnologie auf eine Leiterplatte montiert zu werden.

In einer Ausführungsform kann der Chip dazu eingerichtet sein, das Messsignal nicht auf der Oberfläche des Chips abzustrahlen, sondern an einer der Chip-Kanten. Dies kann z.B. durch eine spezielle Antennenanordnung auf dem Chip erreicht werden.

In einer Ausführungsform ist die planare Antenne als eine im Wesentlichen ebene Struktur auf der Trägerplatte realisiert. Die Trägerplatte kann z.B. als eine Leiterplatte oder als ein Halbleitersubstrat ausgeführt sein. Insbesondere bei hohen Frequenzen kann die Wellenlänge so klein werden, dass λ/4-Strukturen direkt auf dem Halbleitersubstrat implementiert werden können.

In einer Ausführungsform ist der Generator Teil eines Halbleiterchips. Der Halbleiterchip kann noch weitere Systemteile beinhalten, z.B. für die Steuerung und/oder Auswertung der Messungen, für die Kommunikation und/oder für die Spannungsversorgung des Messgeräts.

In einer Ausführungsform ist die planare Antenne als eine Yagi-Antenne oder als eine Quasi-Yagi-Antenne realisiert. Abhängig von der Frequenz kann diese Antenne als planare Struktur auf einer Leiterplatte oder auf einem Chip realisiert werden. Diese Struktur kann dabei z.B. so ausgeführt sein, dass diese nicht wie andere planare Strukturen von der Oberfläche des Chips abstrahlt, sondern 90° davon, d.h. in Richtung einer der Längsseiten des Chips.

In einigen Ausführungsformen ist die planare Antenne als eine Vivaldi-Antenne realisiert. In einer Ausführungsform ist die Vivaldi-Antenne mit einer anderen planaren Antenne, z.B. einer Yagi-Antenne, kombiniert, z.B. eine erste Antenne auf der Vorderseite und eine zweite Antenne auf einer Rückseite der Trägerplatte. Dadurch können bestimmte Abstrahlcharakteristiken erzielt werden und/oder es können ohne mechanische Bauteile die Abstrahlcharakteristiken des Gesamtsystems auch während des Betriebs verändert werden. So kann beispielsweise bei geringem Füllstand eine schmale Abstrahlcharakteristik gewählt werden und bei hohem Füllstand eine breite Abstrahlcharakteristik. Auf diese Weise kann die Messgenauigkeit und/oder der Energieverbrauch des Messgeräts in weiten Bereichen variiert werden. Eine Variation der Abstrahlcharakteristik kann z.B. vorteilhaft für die Topologieerfassung einer Füllgutoberfläche genutzt werden.

In einer Ausführungsform kann - zusätzlich oder alternativ - eine weitere planare Antenne und/oder ein weiterer Antennentyp verwendet werden.

Die Radarsenderanordnung weist weiterhin eine Hochfrequenz-Linse auf, wobei die Hochfrequenz-Linse in einer Abstrahlrichtung der planaren Antenne angeordnet ist, um dadurch die Abstrahlcharakteristik der planaren Antenne zu beeinflussen. Durch eine derartige Hochfrequenz-Linse kann die Abstrahlcharakteristik so verändert werden, um einen möglichst schmalen Abstrahlwinkel zu erzielen. Beispielsweise lassen sich bei Frequenzen von mehr als 200 GHz mit Linsen im Bereich von 15 bis 20 mm Durchmesser Öffnungswinkel von wenigen Grad, z.B. von weniger als 5°, erreichen. Die Linsen können z.B. aus Polyethylen hoher Dichte (HDPE, high-density polyethylene), PTFE (Polytetrafluorethylen), PEEK (Polyetheretherketon) oder Keramik bestehen und/oder zumindest eines dieser Materialien aufweisen.

Die Radarsenderanordnung weist ein Gehäuse auf, innerhalb dessen die Radarsenderanordnung (10) angeordnet ist. Zusammen mit der seitlichen Abstrahlung des Radarsignals (siehe oben) kann die Leiterplatte senkrecht in dem Gehäuse eines Sensors montiert werden und auf diese Weise der Platz optimal ausgenutzt werden.

In einem Ausführungsbeispiel kann das Halbleitermaterial eines Radar-Chips auf einem abgewinkelten Formteil, welches beispielsweise als spritzgegossener Schaltungsträger (MID: Molded Interconnect Device) ausgeführt sein kann, montiert, kontaktiert und mittels einer Umspritzung gehäust werden.

In einem Ausführungsbeispiel kann ein SMD-Bauteil mit einer Radarsenderanordnung hergestellt werden, indem das Halbleitersubstrat mittels eines 3D-geformten Trägersubstrats befestigt, kontaktiert und umspritzt wird.

Das Gehäuse ist als ein Prozessanschluss oder als Teil eines Prozessanschlusses realisiert. Dadurch kann - bei verhältnismäßig geringem konstruktivem Aufwand - ein robustes System für einen breiten Einsatzbereich zur Verfügung gestellt werden.

Ein weiteres Beispiel, das nicht von den Ansprüchen umfasst ist, betrifft eine Radarsenderanordnung für einen Sensor zur Füllstandmessung oder zur Grenzstandbestimmung, die einen Generator aufweist, der zur Erzeugung von Mikrowellen eingerichtet ist, eine Antenne, die mit dem Generator verbunden ist und die zum Senden der Mikrowellen von dem Generator eingerichtet ist, und eine Trägerplatte, wobei die Antenne, mittels eines L-förmig gewinkelten Formteils, im Wesentlichen senkrecht zu einer Oberflächennormalen der Trägerplatte angeordnet ist und eingerichtet ist, die Mikrowellen senkrecht zu einer Oberflächennormalen zu senden.

In einem weiteren Beispiel, das nicht von den Ansprüchen umfasst ist, ist das Formteil als ein SMD-Bauteil mit einer Radarsenderanordnung ausgeführt. Das SMD-Bauteil kann z.B. hergestellt werden, indem das Halbleitersubstrat mittels eines 3D-geformten Trägersubstrats befestigt, kontaktiert und umspritzt wird.

In einer Ausführungsform weisen die Mikrowellen eine Frequenz von mindestens 40 GHz, beispielsweise von mindestens 140 GHz, von mindestens 200 GHz, auf. Bei diesen Frequenzen kann die Radarsenderanordnung beispielsweise auf einem Halbleiterchip integriert sein.

Ein weiterer Aspekt betrifft eine Verwendung einer Radarsenderanordnung wie oben und/oder im Folgenden beschrieben zur Füllstandmessung, zur Grenzstandbestimmung und/oder zur Topologieerfassung, zur Bereichsüberwachung und/oder zur Fertigungsautomation.

Zur weiteren Verdeutlichung wird die Erfindung anhand von in den Figuren abgebildeten Ausführungsformen beschrieben. Diese Ausführungsformen sind nur als Beispiel, nicht aber als Einschränkung zu verstehen. Die Darstellungen in den folgenden Figuren sind schematisch und nicht maßstäblich.

### Kurze Beschreibung der Figuren

Es zeigt:
- **Fig. 1**: eine schematische Skizze einer Radarsenderanordnung gemäß einem Beispiel in Seitenansicht, das nicht von den Ansprüchen umfasst ist;
- **Fig. 2a**: eine schematische Skizze einer Radarsenderanordnung gemäß einer Ausführungsform in Seitenansicht;
- **Fig. 2b**: eine schematische Skizze einer Radarsenderanordnung gemäß einer weiteren Ausführungsform in Seitenansicht;
- **Fig. 3a**: eine schematische Skizze einer Radarsenderanordnung gemäß einem Beispiel in Draufsicht, das nicht von den Ansprüchen umfasst ist;
- **Fig. 3b**: eine schematische Skizze einer Radarsenderanordnung gemäß einem Beispiel in Draufsicht, das nicht von den Ansprüchen umfasst ist;
- **Fig. 3c**: eine schematische Skizze einer Radarsenderanordnung gemäß einem Beispiel in Draufsicht, das nicht von den Ansprüchen umfasst ist;
- **Fig. 4**: eine schematische Skizze einer Radarsenderanordnung gemäß einem Beispiel in Seitenansicht, das nicht von den Ansprüchen umfasst ist.

### Detaillierte Beschreibung von Ausführungsformen

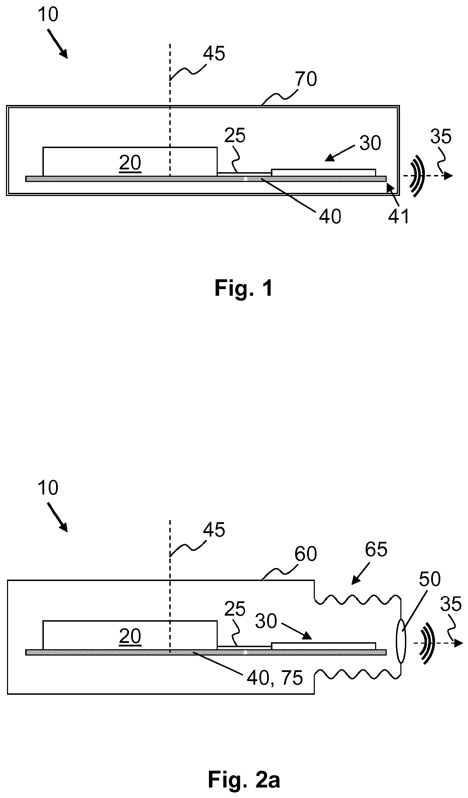

**Fig. 1** zeigt eine schematische Skizze einer Radarsenderanordnung gemäß einem Beispiel in Seitenansicht, das nicht von den Ansprüchen umfasst ist. Die Radarsenderanordnung 10 weist eine Trägerplatte 40 auf. Die Trägerplatte 40 kann z.B. als eine Leiterplatte oder als ein Halbleitersubstrat ausgeführt sein. Ferner ist eine Oberflächennormale 45 zu der Trägerplatte 40 eingezeichnet. Auf der Trägerplatte 40 ist ein Generator 20 integriert. Der Generator 20 ist zur Erzeugung von Mikrowellen eingerichtet. Der Halbleiterchip, der den Generator 20 umfasst, kann noch weitere Systemteile beinhalten, z.B. für die Steuerung und/oder Auswertung der Messungen, für die Kommunikation und/oder für die Spannungsversorgung eines Messgeräts, innerhalb dessen die Trägerplatte 40 integriert ist. Weitere Details, wie z.B. Zuleitungen zu dem Halbleiterchip, sind nicht dargestellt.

Die Trägerplatte 40 weist weiterhin eine planare Antenne 30 auf, die mit dem Generator 20 über eine Leitung 25 verbunden ist. Die planare Antenne ist in der Nähe einer Kante 41 der Trägerplatte 40 platziert. Die planare Antenne 30 ist zum Senden der Mikrowellen von dem Generator 20 eingerichtet und weist eine Abstrahlrichtung oder Hauptabstrahlrichtung 35 auf, die durch einen Pfeil skizziert ist. Die planare Antenne 30 und die Abstrahlrichtung 35 sind im Wesentlichen senkrecht zu einer Oberflächennormalen 45 der Trägerplatte 40 angeordnet. Insbesondere bei hohen Frequenzen kann die Wellenlänge der Mikrowellen so klein werden, dass λ/4-Strukturen oder entsprechend andere Antennenstrukturen direkt auf dem Halbleitersubstrat 40 implementiert werden können.

Das Trägersubstrat 40 kann in ein SMD-Gehäuse 70 eingebaut werden, um es später in einem Standardprozess (z.B. löten oder kleben) auf eine Leiterplatte zu montieren. Das SMD-Gehäuse hat dazu auf der Unterseite entsprechende Kontaktstellen.

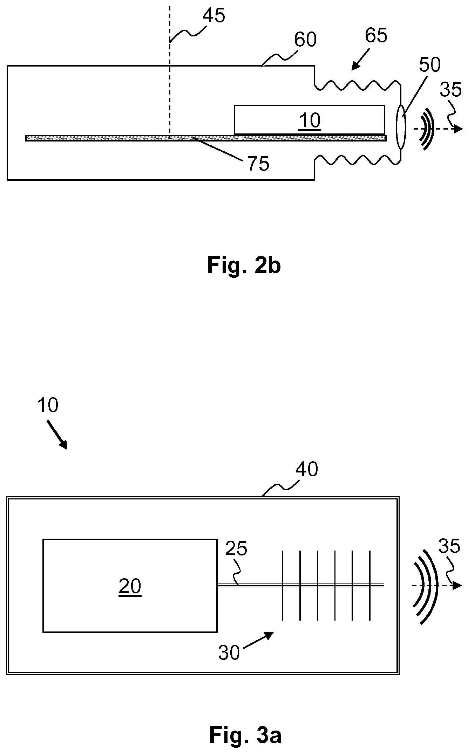

**Fig. 2a** **und** **2b** zeigen schematische Skizzen einer Radarsenderanordnung 10 gemäß einer Ausführungsform in Seitenansicht. Gleiche Bezugszeichen wie bei **Fig. 1** bezeichnen gleiche oder ähnliche Elemente. Bei dem Ausführungsbeispiel von **Fig. 2a** ist die Radarsenderanordnung 10 vorteilhaft in einem Gehäuse 60 angeordnet, das Teil eines Sensors oder Messgerätes sein kann. Auf diese Weise kann der Platz in dem Gehäuse 60 optimal ausgenutzt werden. Vorteilhaft ist weiterhin, dass die planare Antenne 30 in der Nähe einer Kante der Trägerplatte 40 oder, bei einer alternativen Ausführungsform, der Leiterplatte 75 platziert ist und dass die Mikrowellen oder das Radarsignal seitlich in Richtung einer Linse 50 abgestrahlt werden. Das Ausführungsbeispiel zeigt weiterhin die Hochfrequenz-Linse 50, welche zur Bündelung der Mikrowellen beitragen und so einen schmalen Abstrahlwinkel erzielen kann. Dies kann insbesondere bei langen Messentfernungen vorteilhaft sein, z.B. um den Füllstand, Pegel und/oder die Oberflächentopologie in einem großen Behälter oder Messtank oder über einem Flussbett zu messen.

Bei **Fig. 2b** ist das Ausführungsbeispiel aus **Fig. 1** als SMD-Bauelement 10 auf einer Leiterplatte 75 in einem Sensorgehäuse 60 eingebaut. Die Abstrahlung erfolgt wie im Ausführungsbeispiel aus **Fig. 2a****.**

Das gezeigte Gehäuse 60 kann auch als ein Prozessanschluss oder als Teil eines Prozessanschlusses realisiert sein. Dabei kann z.B. der Abschlussbereich 65 zur Prozessseite hin besonders robust gegen thermische, mechanische und/oder chemische Materialien ausgeführt sein. Dadurch kann - bei verhältnismäßig geringem konstruktivem Aufwand - ein robustes System für einen breiten Einsatzbereich zur Verfügung gestellt werden.

**Fig. 3a** zeigt eine schematische Skizze einer Radarsenderanordnung 10 gemäß einem Beispiel in Draufsicht (entlang der Oberflächennormalen 45) das nicht von den Ansprüchen umfasst ist. Diese Ausführungsform kann z.B. der Ausführungsform von **Fig. 1** entsprechen. Die Radarsenderanordnung 10 weist eine Trägerplatte 40 auf. Die Trägerplatte 40 kann z.B. als Leiterplatte oder als Halbleitersubstrat ausgeführt sein. Auf der Trägerplatte 40 ist ein Generator 20 und eine planare Antenne 30 angeordnet. Der Generator 20 und die planare Antenne 30 sind über eine Leitung 25 verbunden. Die planare Antenne 30 ist im schematisch gezeigten Ausführungsbeispiel als eine sogenannte Yagi-Antenne ausgeführt. Die Yagi-Antenne ist in der Nähe einer Kante der Trägerplatte 40 platziert. Die Yagi-Antenne 30 ist zum Senden der Mikrowellen von dem Generator 20 eingerichtet und weist eine Abstrahlrichtung oder Hauptabstrahlrichtung 35 auf, die durch einen Pfeil dargestellt ist.

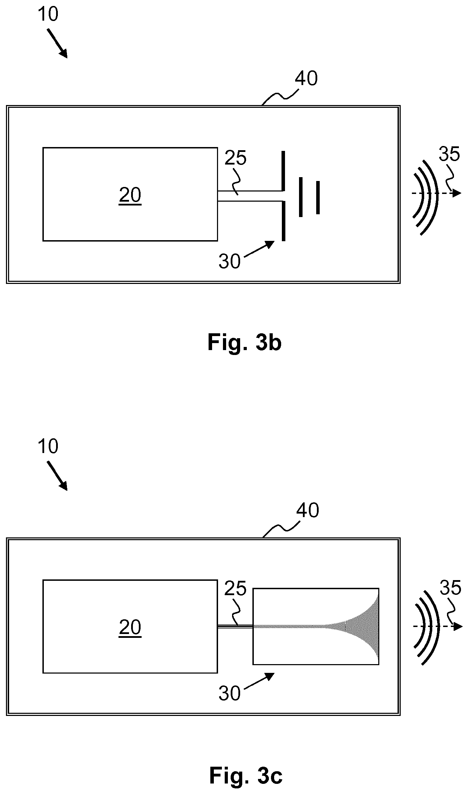

**Fig. 3b** zeigt eine schematische Skizze einer Radarsenderanordnung 10 gemäß einem Beispiel in Draufsicht, das nicht von den Ansprüchen umfasst ist. Gleiche Bezugszeichen wie bei **Fig. 3a** bezeichnen gleiche oder ähnliche Elemente. Die planare Antenne 30 ist bei diesem schematisch gezeigten Ausführungsbeispiel als eine sogenannte Quasi-Yagi-Antenne ausgeführt.

**Fig. 3c** zeigt eine schematische Skizze einer Radarsenderanordnung 10 gemäß einem Beispiel in Draufsicht, das nicht von den Ansprüchen umfasst ist. Gleiche Bezugszeichen wie bei **Fig. 3a** bezeichnen gleiche oder ähnliche Elemente. Die planare Antenne 30 ist bei diesem schematisch gezeigten Ausführungsbeispiel als eine sogenannte Vivaldi-Antenne ausgeführt.

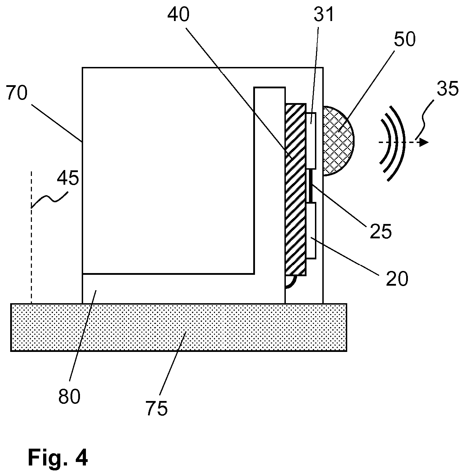

**Fig. 4** zeigt eine schematische Skizze einer Radarsenderanordnung 11 gemäß einem Beispiel in Seitenansicht, das nicht von den Ansprüchen umfasst ist. Die Radarsenderanordnung 11 weist eine Trägerplatte 40 auf. Auf der Trägerplatte 40 ist ein Generator 20 in Form eines Halbleiterchips angeordnet. Der Generator 20 ist zur Erzeugung von Mikrowellen eingerichtet. Ferner ist auf der Trägerplatte 40 eine Antenne 31 angeordnet. Die Antenne 31 ist als eine planare Antenne ausgeführt, welche eine Hauptabstrahlrichtung 35 in Richtung ihrer Oberflächennormalen aufweist. Die Antenne 31 ist mit dem Generator 20 über die Leitung 25 verbunden und ist zum Senden der Mikrowellen von dem Generator 20 eingerichtet. Bei der Antenne kann es sich beispielsweise um eine Patch-Antenne handeln. Sowohl die Trägerplatte 40 als auch die Antenne 31 sind mittels eines L-förmig gewinkelten Formteils 80 im Wesentlichen senkrecht zur Leiterplatte 75 angeordnet. Das L-förmig gewinkelte Formteil 80 kann beispielsweise als spritzgegossener Schaltungsträger (MID: Molded Interconnect Device) ausgeführt sein. Das MID kann montiert, kontaktiert und mittels einer Umspritzung 70 gehäust werden. Weiterhin kann das gehäuste Bauteil eine Linse 50 zur weiteren Fokussierung des abgestrahlten Mikrowellensignals aufweisen.

Ergänzend sei darauf hingewiesen, dass "umfassend" und "aufweisend" keine anderen Elemente oder Schritte ausschließt und die unbestimmten Artikel "eine" oder "ein" keine Vielzahl ausschließen. Bezugszeichen in den Ansprüchen sind nicht als Einschränkungen anzusehen.

### Liste der Bezugszeichen

- 10, 11: Radarsenderanordnung
- 20: Generator
- 25: Leitung
- 30: planare Antenne mit Hauptabstrahlung in der Antennenebene
- 31: planare Antenne mit Hauptabstrahlung senkrecht zur Antennenebene
- 35: Abstrahlrichtung
- 40: Trägerplatte
- 41: Kante der Trägerplatte
- 42: gewinkeltes Formteil
- 43: Umspritzung
- 45: Normale zur Trägerplatte
- 50: Hochfrequenz-Linse
- 60: Sensorgehäuse
- 70: SMD-Gehäuse
- 75: Leiterplatte
- 80: Formteil L-förmig

## Patentansprüche

1. Radarsenderanordnung (10) für einen Sensor zur Prozess- und Fertigungsautomation, der zur Füllstandmessung oder zur Grenzstandbestimmung eingerichtet ist, die Radarsenderanordnung (10) aufweisend:
einen Generator (20), der zur Erzeugung von Mikrowellen eingerichtet ist,
eine planare Antenne (30), die mit dem Generator (20) verbunden ist und die zum Senden der Mikrowellen von dem Generator (20) eingerichtet ist,
eine Trägerplatte (40),
wobei die planare Antenne (30) im Wesentlichen senkrecht zu einer Oberflächennormalen (45) der Trägerplatte (40) angeordnet ist und eingerichtet ist, die Mikrowellen senkrecht zu der Oberflächennormalen (45) zu senden,
wobei ein Gehäuse (60) vorgesehen ist, innerhalb dessen die Radarsenderanordnung (10) angeordnet ist, wobei das Gehäuse (60) in seiner Längserstreckung zwei Abschnitte aufweist, wobei ein zweiter Abschnitt einen kleineren Querschnitt als ein erster Abschnitt aufweist und die Antenne (30) zumindest teilweise in dem zweiten Abschnitt angeordnet ist,
wobei die Radarsenderanordnung (10) als SMD-Bauelement (Surface Mount Device) zumindest teilweise innerhalb des zweiten Abschnitts angeordnet ist,
und das Gehäuse (60) als ein Prozessanschluss oder als Teil eines Prozessanschlusses realisiert ist, **dadurch gekennzeichnet, dass** die Radarsenderanordnung eine Hochfrequenz-Linse (50) aufweist, wobei die Hochfrequenz-Linse (50) in einer Abstrahlrichtung (55) der planaren Antenne (30) angeordnet ist, um dadurch die Abstrahlcharakteristik der planaren Antenne (30) zu beeinflussen.

2. Radarsenderanordnung (10) nach Anspruch 1,
wobei die Trägerplatte (40) als eine Leiterplatte ausgeführt ist.

3. Radarsenderanordnung (10) nach Anspruch 1,
wobei die Trägerplatte (40) als ein Halbleitersubstrat ausgeführt ist.

4. Radarsenderanordnung (10) nach einem der vorhergehenden Ansprüche,
wobei die planare Antenne (30) als eine im Wesentlichen ebene Struktur auf der Trägerplatte (40) realisiert ist.

5. Radarsenderanordnung (10) nach einem der vorhergehenden Ansprüche,
wobei der Generator (20) Teil eines Halbleiterchips ist.

6. Radarsenderanordnung (10) nach einem der vorhergehenden Ansprüche,
wobei die planare Antenne (30) als eine Yagi-Antenne oder als eine Quasi-Yagi-Antenne realisiert ist.

7. Radarsenderanordnung (10) nach einem der vorhergehenden Ansprüche,
wobei die planare Antenne (30) als eine Vivaldi-Antenne realisiert ist.

8. Radarsenderanordnung (10) nach einem der Ansprüche 1 bis 7,
wobei die Mikrowellen eine Frequenz von mindestens 40 GHz, beispielsweise von mindestens 140 GHz, von mindestens 200 GHz, aufweisen.

9. Verwendung einer Radarsenderanordnung (10) nach einem der Ansprüche 1 bis 8 zur Füllstandmessung, zur Grenzstandbestimmung, zur Topologieerfassung, zur Bereichsüberwachung und/oder zur Fertigungsautomation.

## Claims

1. A radar transmitter arrangement (10) for a sensor for process and production automation, which is configured for level measurement or limit level determination, the radar transmitter arrangement (10) comprising:
a generator (20) configured to generate microwaves,
a planar antenna (30) connected to the generator (20) and configured to transmit the microwaves from the generator (20),
a carrier plate (40),
wherein the planar antenna (30) is arranged substantially perpendicular to a surface normal (45) of the support plate (40) and is configured to transmit the microwaves perpendicular to the surface normal (45),
wherein a housing (60) is provided, within which the radar transmitter arrangement (10) is arranged, the housing (60) having two sections in its longitudinal extension, a second section having a smaller cross-section than a first section, and the antenna (30) being arranged at least partially in the second section,
wherein the radar transmitter arrangement (10) is a surface mount device (SMD) that arranged at least partially within the second section,
and the housing (60) is implemented as a process connection or as part of a process connection, and
**characterised in that** the radar transmitter arrangement has a high-frequency lens (50), wherein the high-frequency lens (50) is arranged in a radiation direction (55) of the planar antenna (30) in order to thereby influence the radiation characteristics of the planar antenna (30).

2. The radar transmitter arrangement (10) of claim 1,
wherein the carrier plate (40) is designed as a printed circuit board.

3. The radar transmitter arrangement (10) of claim 1,
wherein the carrier plate (40) is designed as a semiconductor substrate.

4. The radar transmitter arrangement (10) of one of the preceding claims,
wherein the planar antenna (30) is implemented as a substantially flat structure on the carrier plate (40).

5. The radar transmitter arrangement (10) of one of the preceding claims,
wherein the generator (20) is part of a semiconductor chip.

6. The radar transmitter arrangement (10) of one of the preceding claims,
wherein the planar antenna (30) is implemented as a Yagi antenna or as a quasi-Yagi antenna.

7. The radar transmitter arrangement (10) of one of the preceding claims,
wherein the planar antenna (30) is implemented as a Vivaldi antenna.

8. The radar transmitter arrangement (10) of one of claims 1 to 7,
wherein the microwaves have a frequency of at least 40 GHz, for example of at least 140 GHz, of at least 200 GHz.

9. Use of a radar transmitter arrangement (10) of one of claims 1 to 8 for level measurement, limit level determination, topology detection, area monitoring and/or production automation.

## Revendications

1. Ensemble d'émetteur radar (10) pour un capteur destiné à l'automatisation de processus et de la fabrication, qui est configuré pour mesurer un niveau de remplissage ou déterminer un niveau de seuil, l'ensemble d'émetteur radar (10) comportant :
un générateur (20) qui est configuré pour générer des hyperfréquences, une antenne plane (30) qui est reliée au générateur (20) et est configurée pour émettre les hyperfréquences à partir du générateur (20),
une plaque de support (40),
dans lequel l'antenne plane (30) est disposée de manière sensiblement perpendiculaire à une normale de surface (45) de la plaque de support (40) et est configurée pour émettre les hyperfréquences perpendiculairement à la normale de surface (45),
dans lequel est prévu un boîtier (60) à l'intérieur duquel est disposé l'ensemble d'émetteur radar (10), le boîtier (60) comportant deux parties dans son extension longitudinale, une seconde partie présentant une section transversale plus petite qu'une première partie et l'antenne (30) étant disposé au moins partiellement dans la seconde partie,
dans lequel l'ensemble d'émetteur radar (10) est disposé au moins partiellement à l'intérieur de la seconde partie comme un composant SMD (élément de montage en surface), et le boîtier (60) est réalisé comme une connexion de processus ou comme une partie d'une connexion de processus, **caractérisé en ce que** l'ensemble d'émetteur radar comporte une lentille à haute fréquence (50), la lentille à haute fréquence (50) étant disposée dans une direction d'émission (55) de l'antenne plane (30) de manière à influencer la caractéristique d'émission de l'antenne plane (30).

2. Ensemble d'émetteur radar (10) selon la revendication 1,
dans lequel la plaque de support (40) est réalisée sous la forme d'une carte de circuits imprimés.

3. Ensemble d'émetteur radar (10) selon la revendication 1,
dans lequel la plaque de support (40) est réalisée sous la forme d'un substrat semi-conducteur.

4. Ensemble d'émetteur radar (10) selon l'une des revendications précédentes, dans lequel l'antenne plane (30) est réalisée sur la plaque de support (40) sous la forme d'une structure sensiblement plate.

5. Ensemble d'émetteur radar (10) selon l'une des revendications précédentes, dans lequel le générateur (20) fait partie d'une puce à semi-conducteur.

6. Ensemble d'émetteur radar (10) selon l'une des revendications précédentes, dans lequel l'antenne plane (30) est réalisée sous la forme d'une antenne Yagi ou sous la forme d'une antenne quasi-Vagi.

7. Ensemble d'émetteur radar (10) selon l'une des revendications précédentes, dans lequel l'antenne plane (30) est réalisée sous la forme d'une antenne Vivaldi.

8. Ensemble d'émetteur radar (10) selon l'une des revendications 1 à 7,
dans lequel les hyperfréquences ont une fréquence d'au moins 40 GHz, par exemple d'au moins 140 GHz, d'au moins 200 GHz.

9. Utilisation d'un ensemble d'émetteur radar (10) selon l'une des revendications 1 à 8 pour la mesure d'un niveau de remplissage, pour la détermination d'un niveau de seuil, pour la détection d'une topologie, pour la surveillance de zone, et/ou pour l'automatisation de la fabrication.
